# DEMANDE DE BREVET EUROPEEN

(11) **EP 1 475 023 A1**
(43) Date de publication de la demande: **10.11.2004**
(21) Numéro de dépôt: 04291171.9
(22) Date de dépôt: 06.05.2004
(51) Int. Cl.: A47J 37/12

(54) **Appareil et procédé de cuisson d'entremets frits**

(30) Priorité: 07.05.2003 FR 0305604
(71) Demandeur: C.S.I., 17000 La Rochelle (FR)
(72) Inventeur: Jacinto, Manuel Luis, 17220 Saint Rogatien (FR)
(74) Mandataire: Thibon, Norbert

(57) **Abrégé**

Appareil (1) de cuisson par friture d'entremets, tels que des beignets qui comporte un panier (3) destiné à recevoir lesdits entremets plongeant dans une cuve dudit appareil contenant de l'huile de friture brûlante, caractérisé en ce que le panier est constitué d'un cadre rectangulaire sur lequel sont fixées des paires de grilles (16, 16') qui sont montées à pivotement, à une de leurs extrémités, autour d'un axe horizontal transversal, la disposition des deux grilles (16, 16') étant la même pour toutes les paires de grilles, et en ce que, dans chaque paire de grilles, la première grille (16) peut pivoter vers le haut dans une position sensiblement verticale et la deuxième grille (16') peut pivoter vers le bas dans une position sensiblement verticale, l'axe de pivotement de la première grille étant voisin de la deuxième grille (16'). L'invention a également pour objet un procédé de cuisson d'entremets avec un tel appareil.

## Description

La présente invention concerne la conception et la réalisation d'un appareil de cuisson par friture d'entremets, tels que des beignets, et, plus particulièrement, les machines qui sont utilisées, par exemple, par des marchands ambulants ou des forains qui vendent des friandises qu'ils font frire devant leurs clients. Ces appareils comportent essentiellement un panier dans lequel une première face des entremets est frite dans une cuve contenant de l'huile de friture brûlante, l'entremets est retourné et on fait frire la deuxième face de l'entremets.

L'opération de retournement des entremets est réalisée alors que ces derniers se trouvent dans l'huile. brûlante et elle ne peut donc être faite directement à la main. Par ailleurs, il est souhaitable de retourner en même temps tous les entremets qui sont en train de cuire. A cet effet, il existe, dans les machines de production industrielle d'entremets frits, des dispositifs de cuisson avec retournement qui permettent de réaliser rapidement et en toute sécurité cette opération de cuisson avec retournement. Ces dispositifs ont une structure complexe et coûteuse et ils ne peuvent pas être utilisés dans les appareils de faible production, où l'on cuit par exemple quelques dizaines de beignets, qui sont utilisés par les marchands ambulants ou les forains.

En outre, pour les appareild plus généralement utilisés, lorsque les entremets sont cuits, il faut les retirer du panier un par un pour les déposer sur un plateau de vente, ce qui constitue une opération longue et délicate, compte tenu de leur température élevée. Il est donc souhaitable de disposer d'un dispositif permettant de vider rapidement le panier pour préparer une nouvelle cuisson.

La présente invention a donc pour objet un appareil de cuisson d'entremets par friture qui comporte un dispositif de structure simple et peu coûteuse pour assurer le retournement et la cuisson des entremets en palliant les inconvénients précités. Elle a aussi pour objet, pour les mêmes raisons, un procédé de cuisson par d'entremets par mise en oeuvre d'un tel appareil.

L'appareil selon l'invention est notamment remarquable en ce que le panier est constitué d'un cadre horizontal rectangulaire sur lequel sont fixées des paires de grilles horizontales transversales voisines qui sont montées à pivotement, à une de leurs extrémités, autour d'un axe horizontal transversal, la disposition des deux grilles étant la même pour toutes les paires de grilles, et en ce que, dans chaque paire de grilles, une première grille peut pivoter vers le haut jusqu'à atteindre au moins une position sensiblement verticale et la deuxième grille peut pivoter vers le bas jusqu'à atteindre au moins une position sensiblement verticale, l'axe de pivotement de la première grille étant voisin de la deuxième grille.

Le pivotement de la première grille vers le haut et vers la deuxième grille permet de retourner les entremets et de les déposer sur la deuxième grille, et le pivotement vers le bas de la deuxième grille permet de vider le panier en faisant tomber les entremets cuits sous le panier.

Selon une autre caractéristique de l'invention, l'extrémité articulée des premières grilles comporte un rebord dirigé vers le haut. Ce rebord permet de guider l'entremets quand la première grille pivote vers le haut de telle manière qu'il soit correctement retourné pour présenter son autre face à la cuisson.

Avantageusement, le panier comporte des parois verticales transversales ajourées qui s'étendent sensiblement en prolongement des grilles. Ces parois permettent d'éviter que, lors des mouvements du panier, les entremets ne tombent à l'extérieur du panier.

Selon encore une autre caractéristique de l'invention, l'ensemble des premières grilles, à pivotement vers le haut, et l'ensemble des deuxièmes grilles, à pivotement vers le bas, comportent chacun un dispositif de commande de leur pivotement. Cela permet de commander facilement le retournement simultané des entremets et le vidage du panier.

Avantageusement, chaque dispositif de commande du pivotement comporte une crémaillère qui entraîne des roues dentées solidaires des axes des grilles. Chaque crémaillère est commandée en translation par une manette.

L'appareil selon l'invention comporte avantageusement un dispositif de montée et de descente du panier. De préférence, ce dispositif est associé à un dispositif de maintien du panier en position haute qui peut notamment comporter un vérin à gaz. Ceci permet à l'utilisateur de commander la durée de la cuisson des entremets.

La présente invention a également pour objet un procédé de cuisson d'entremets, tels que des beignets, dans un appareil qui comporte un panier du type défini plus haut dans lequel une première face des entremets est frite dans une cuve contenant de l'huile de friture brûlante, les entremets sont retournés et on fait frire la deuxième face de l'entremets, caractérisé en ce que :
- on dépose les entremets à frire sur les premières grilles de chaque paire de grille, les entremets étant alignés parallèlement à l'axe de pivotement des grilles,
- on fait frire une première face des entremets, le panier étant disposé dans la cuve,
- on fait pivoter vers le haut, jusqu'à atteindre au moins une position sensiblement verticale, les premières grilles de chaque paire de grilles, de telle manière que les entremets viennent se placer sur les deuxièmes grilles de chaque paire de grilles, leur face non cuite étant en contact avec la grille et le panier restant en position de cuisson dans la cuve,
- on fait frire la deuxième face des entremets, le panier étant disposé dans la cuve,
- on soulève le panier et on place un plateau au-dessous du panier et au-dessus de la cuve,
- et on fait pivoter vers le bas, jusqu'à atteindre au moins une position sensiblement verticale, les deuxièmes grilles de chaque paire de grilles, de telle manière que les entremets viennent se placer sur le plateau.

L'invention sera maintenant plus complètement décrite dans le cadre de caractéristiques préférées et de leurs avantages, en application à un appareil de fabrication de beignets pour la vente ambulante, en faisant référence aux figures 1 à 8 dans lesquelles :
- la figure 1 représente une vue générale schématique d'un appareil suivant l'invention qui est destiné à la cuisson et à la vente sur place de beignets par des marchands ambulants,
- la figure 2 illustre une vue partielle en coupe suivant un plan longitudinal du panier,
- la figure 3 illustre une vue en coupe selon un plan longitudinal du corps d'un appareil suivant l'invention,
- la figure 4 représente une vue en coupe suivant le plan B-B de l'appareil de la figure 3,
- la figure 5 montre une vue partielle arrière du panier,
- la figure 6 montre une vue partielle en coupe selon le plan B-B du panier de la figure 5,
- la figure 7 représente le dispositif de montée et de descente du panier,
- et les figures 8a à 8f montrent, en vue schématique, un enchaînement des étapes de cuisson des entremets.

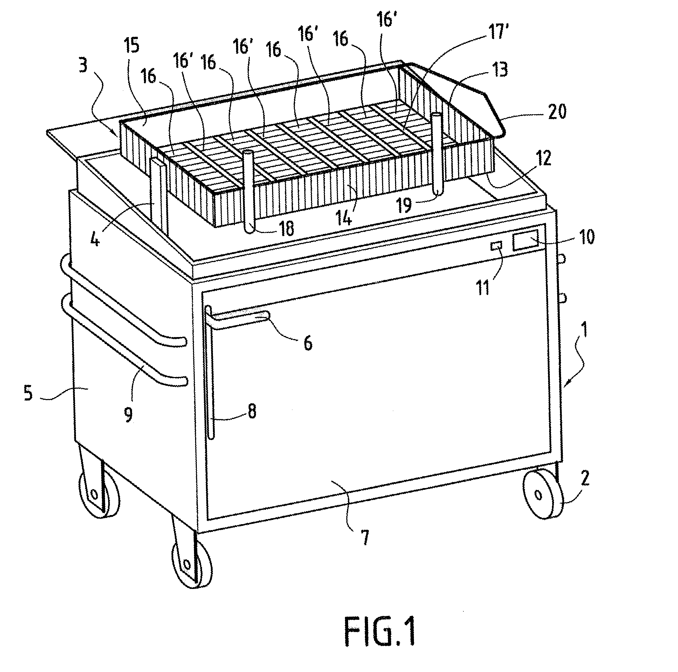

L'appareil suivant l'invention qui est représenté de manière schématique sur la figure 1 comporte un corps principal 1 de forme générale parallélépipédique. Ce corps 1 est monté sur quatre roulettes 2, si bien qu'il peut être facilement déplacé. L'appareil est représenté sur les figures dans sa position normale d'utilisation, reposant sur le sol par ses roulettes.

Toutes les pièces internes de l'appareil sont constituées en un matériau résistant à la chaleur et compatible avec une utilisation pour la cuisson de produits alimentaires. Elles sont notamment constituées en métal inoxydable.

Quand l'appareil est en fonctionnement, le corps 1 contient un bain d'huile, non représenté sur la figure, qui occupe sensiblement toute sa surface intérieure en section transversale, ainsi qu'un dispositif de chauffage de ce bain d'huile à une température qui est suffisamment élevée pour permettre la cuisson des beignets.

Un panier 3 destiné à recevoir les beignets, également constitué en métal inoxydable, est supporté au-dessus du corps 1 de l'appareil, à l'aplomb du bain d'huile, par deux montants tubulaires verticaux 4 portant par leur base à l'intérieur de l'appareil et situés dans un plan de symétrie longitudinal du corps 1, chacun respectivement le long d'une face intérieure d'une paroi latérale 5 de ce corps 1.

Chacun des montants 4 est mobile en translation suivant un axe longitudinal, verticalement. Le mouvement de translation des deux montants est commandé simultanément depuis l'extérieur de la cuve de cuisson par une même manette 6, disposée sur la paroi avant 7 du corps de l'appareil, et apte à coulisser dans une rainure longitudinale 8 ménagée sur cette paroi.

Le déplacement de la manette 6 le long de la rainure 8 entraîne ainsi le mouvement de translation des montants 4, et la montée ou la descente subséquente du panier 3 supporté par ces montants. On peut de ce fait, en agissant manuellement sur la manette 6, faire descendre le panier 3 pour le plonger dans le bain d'huile, afin de procéder à la cuisson des beignets qu'il contient, ou le faire remonter pour l'en retirer.

Le corps 1 est muni, sur la face extérieure de chacune de ses parois latérales 5, de poignées 9 qui facilitent son déplacement.

Sur la paroi avant 7 sont disposés un interrupteur électrique 10 commandant le fonctionnement du dispositif de chauffage du bain d'huile ainsi qu'un témoin lumineux de fonctionnement 11.

Le panier 3 comporte un cadre horizontal de fond de forme rectangulaire 12, deux parois verticales transversales 13, une paroi avant 14 et une paroi arrière 15 qui s'étendent verticalement à partir de grilles normalement horizontales 16 et 16'. Il n'est pas fermé sur sa surface supérieure.

Les parois transversales 13 et les parois avant et arrière 14 et 15 sont ajourées sur toute leur longueur, de manière à assurer que l'huile puisse circuler à travers elles, mais que les beignets ne puissent pas s'échapper par les ouvertures ainsi formées.

Le cadre de fond 12 supporte une pluralité de paires de grilles horizontales 16 et 16' qui lui sont transversales et qui sont juxtaposées les unes aux autres de manière à occuper toute la surface de fond du panier 3. Dans l'exemple de réalisation représenté sur la figure, le panier 3 comporte huit premières grilles 16 et huit deuxièmes grilles 16'.

Ces grilles sont destinées à recevoir les beignets, qui y sont disposés selon une rangés transversale. Le nombre et la taille des beignets pouvant être placés sur chaque grille varient en fonction de la surface de la grille. En pratique, on place environ cinq beignets de taille moyenne par grille. Les barreaux constituant les grilles sont prévus suffisamment serrés pour assurer que les beignets ne passent pas entre eux, tout en permettant néanmoins de laisser passer l'huile.

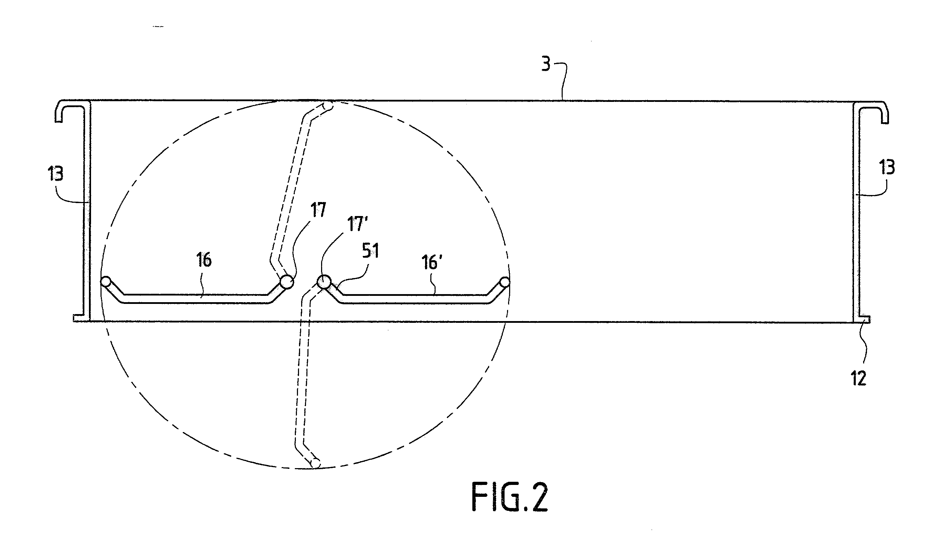

Comme on peut le voir sur la figure 2, les grilles 16 et 16' comportent des rebords 51 sur leurs extrémités longitudinales. Ces rebords sont inclinés sensiblement à 45 degrés vers le haut.

Les grilles sont divisées en deux groupes distincts, chaque grille 16 d'un groupe, ou ensemble, étant juxtaposée dans le cadre de fond à une grille 16' de l'autre groupe. Chaque grille d'un groupe est ainsi appariée à une grille du second groupe, ces deux grilles formant ainsi une paire de grilles 16 et 16' qui sera utilisée pour la cuisson du même ensemble de beignets.

Chacune des grilles 16, 16' est apte à pivoter à une de ses extrémités autour d'un axe transversal 17, 17' qui lui est propre et qui s'étend le long de son bord. Toutes les grilles relevant d'un même ensemble dans chacun des groupes sont commandées solidairement en rotation. Cette commande s'effectue au moyen de deux manettes fixées sur la paroi avant 14 du panier 3, transversalement à celle-ci, à savoir une manette 18 de commande de la rotation des grilles 16 du premier groupe, et une manette 19 de commande de la rotation des grilles 16' du second groupe.

Comme on peut le voir sur la figure 2, les axes 17, 17' des grilles 16 et 16' d'une même paire sont situés sur les bords de ces grilles qui sont voisins l'un de l'autre. Les premières grilles 16 de chaque paire de grilles peuvent pivoter vers le haut en direction de la deuxième grille 16' sur un angle d'au moins 90 degrés pour venir dans une position sensiblement verticale. La deuxième grille 16' peut pivoter vers le bas sur un angle d'au moins 90 degrés pour venir dans une position sensiblement verticale.

Le panier 3 est également pourvu d'une poignée 20 qui est fixée sur une de ses parois transversales 13 et qui facilite sa préhension.

L'appareil tel qu'il est représenté sur les figures ne comporte pas de couvercle. La présence d'un tel couvercle n'est pas nécessaire, car lors de la cuisson des beignets, il ne se produit pas d'éclaboussures d'huile chaude. Cependant, on peut également envisager, dans d'autres modes de réalisation de l'invention, d'équiper l'appareil d'un couvercle. Ce couvercle sera alors muni de deux fentes à travers lesquelles s'inséreront les manettes 18 et 19, de manière qu'elles soient accessible de l'extérieur de l'appareil et que l'utilisateur puisse ainsi, manuellement, commander la rotation des grilles même lorsque le couvercle est fermé.

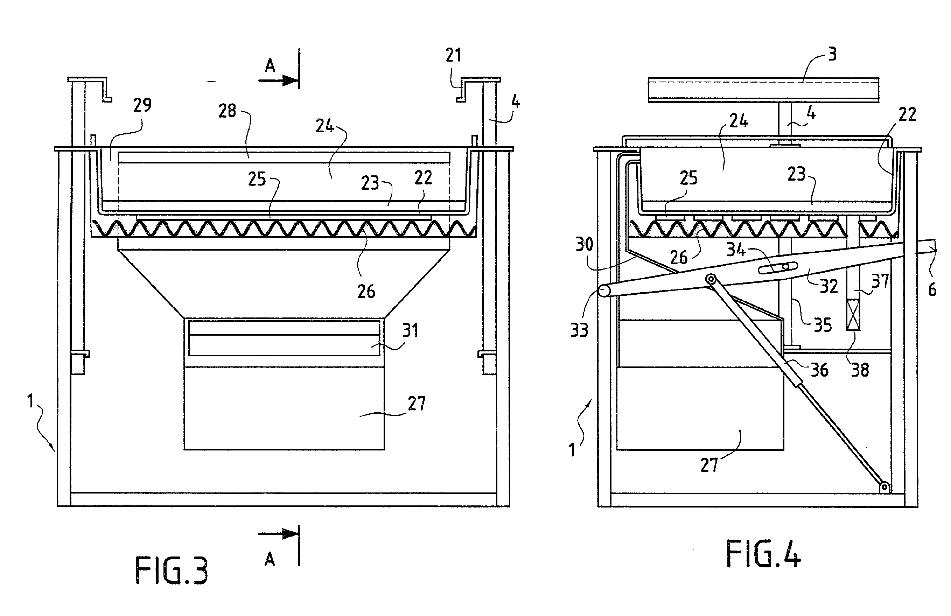

La figure 3 représente une vue en coupe du corps 1 de l'appareil suivant un plan parallèle à sa face avant 7. Dans un souci de clarté de la figure, le dispositif de montée/descente du panier 3 n'a pas été représenté.

On retrouve sur cette figure les montants 4, qui sont chacun pourvus à l'extrémité supérieure d'un crochet 21 destiné à l'accrochage du panier 3.

A l'intérieur du corps 1, dans sa partie supérieure, il est prévu une cuvette 22 qui occupe sensiblement toute sa section transversale. Cette cuvette contient en son fond une couche d'huile de friture 23. C'est dans son volume intérieur 24 que sera amené le panier 3 contenant les beignets, afin de le faire plonger dans l'huile et de procéder ainsi à la friture des beignets.

Une résistance électrique 25 qui est située juste en dessous de la cuvette 22, permet le chauffage de l'huile. Le fonctionnement de cette résistance est commandé par l'interrupteur 10. Une couche d'isolation 26 sépare la résistance 25 du reste de l'appareil.

Un dispositif d'aspiration est également prévu à l'intérieur de l'appareil, afin d'éliminer les odeurs de friture qui peuvent se dégager lors de la cuisson et se révéler désagréables. Ce dispositif est constitué d'un groupe d'aspiration 27 dont la mise en marche est commandée par l'interrupteur 10 conjointement avec celle de la résistance 26. L'aspiration est réalisée par une rainure d'aspiration 28, située sur une paroi latérale 29 de la cuvette 22 au-dessus de la couche d'huile, et reliée au groupe d'aspiration 27 par un conduit 30 (voir figure 4). Un filtre 31 est situé sur le passage de l'air entre la rainure 28 et le groupe d'aspiration 27.

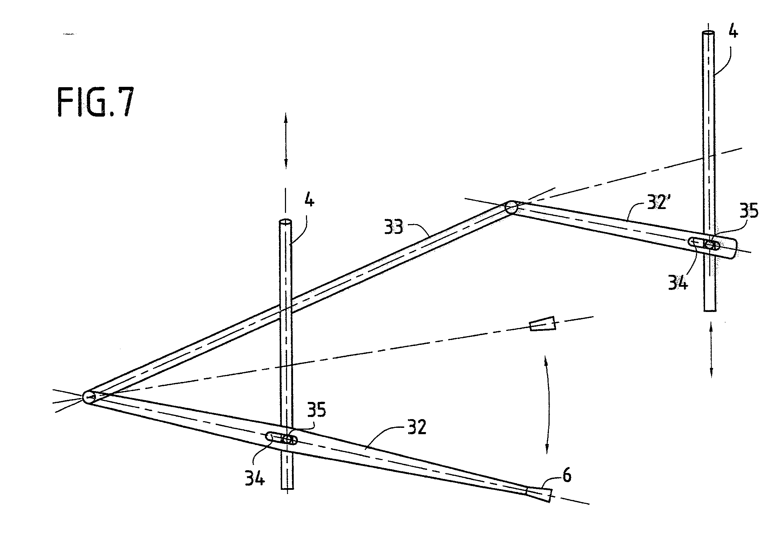

La figure 4 est une vue en coupe dans le plan B-B de l'appareil de la figure 3. Sur cette figure, on peut voir le dispositif de montée et de descente des montants 4 du panier qui est représenté en détail sur la figure 7. Dans le mode de réalisation ici représenté, la manette 6 est située dans le plan B-B.

La manette de montée/descente 6 se prolonge à l'intérieur du corps 1 de l'appareil par un levier 32 qui est fixé sans possibilité de rotation à une extrémité d'un arbre longitudinal 33 qui est monté à rotation dans la face arrière de l'appareil, donc perpendiculaire au plan de la figure 4.

Sensiblement en son milieu, le levier 32 comporte une lumière rectiligne 34 dans laquelle peut coulisser un tourillon horizontal 35 qui est porté par un des montants tubulaires 4. Le deuxième montant 4 est monté à articulation de la même manière sur un levier 32' qui est fixé, également sans possibilité de rotation sur l'autre extrémité de l'arbre longitudinal 33.

Les deux bras 32 et 32' sont ainsi solidarisés de telle manière que, lorsque l'on actionne la poignée 6, ils pivotent ensemble autour de l'axe de rotation de l'arbre 33 et que les deux montants verticaux 4 coulissent ensemble verticalement. Le mouvement de montée/descente de la manette 6 entraîne ainsi le mouvement de montée/descente des montants 4, et donc du panier 3 soutenu par ces montants.

Un vérin à gaz 36, fixé par une extrémité au levier 32, et par une autre extrémité dans le fond du corps 1, assiste le mouvement du levier 32. Il est positionné de telle sorte que, d'une part, il facilite le mouvement de montée de la manette 6 par l'utilisateur et, d'autre part, il maintient automatiquement le système bloqué en position haute (par l'angle qu'il forme avec la verticale dans cette position). Afin de procéder à la descente du panier 3 dans la cuvette 22, l'utilisateur devra par contre exercer une légère pression sur la manette 6, à l'encontre de la force exercée sur le levier 32 par le vérin 36. Ce mécanisme assure avantageusement la simplicité et la sécurité d'utilisation.

Le corps 1 est en outre pourvu d'un système d'évacuation de l'huile usagée, qui comporte un tuyau d'évacuation 37 débouchant dans le fond de la cuvette 22 et relié, par l'intermédiaire d'une vanne 38, à un orifice situé sur la face extérieure d'une des parois latérales du corps 1.

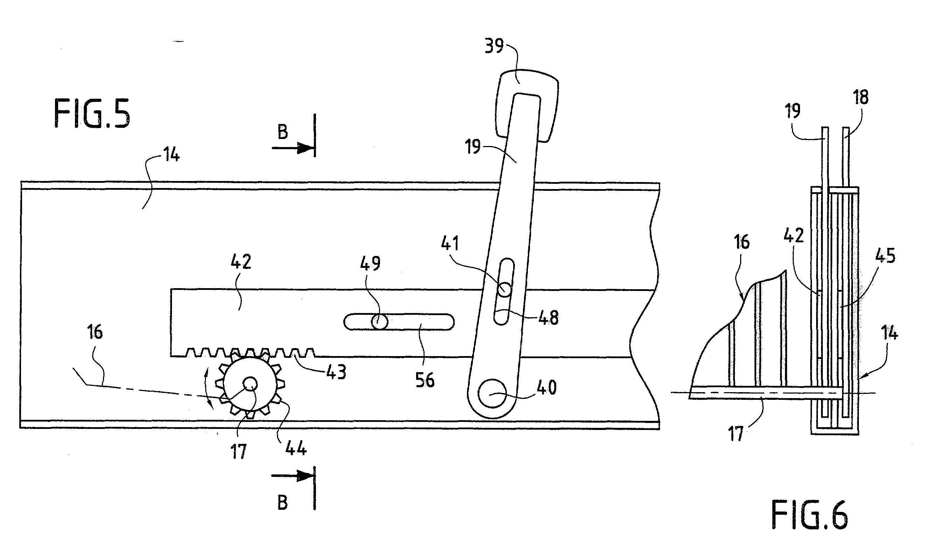

Le système commandant la rotation des grilles 16 et 16' sera maintenant décrit de façon plus détaillée, en se basant sur les figures 5 et 6.

La figure 5 montre une vue partielle de la face arrière du panier 3. Cette figure illustre le fonctionnement de la rotation d'un seul groupe de grilles 16, le fonctionnement étant similaire pour l'autre groupe de grilles 16'.

Sur la paroi avant 14 du panier, transversalement à celle-ci, est fixée la manette 19, qui comporte à son extrémité supérieure une poignée 39 s'élevant au-dessus de la paroi 14. La manette 19 est apte à pivoter par son extrémité inférieure autour d'un axe qui lui est perpendiculaire 40, ici perpendiculaire au plan de la figure 5.

La manette 19 comporte, sensiblement en son milieu, une lumière horizontale rectiligne 48 dans laquelle peut coulisser un tourillon 41 qui est porté par une crémaillère horizontale 42 qui s'étend longitudinalement le long de la paroi 14 et qui est guidée en translation horizontale par un tourillon fixe 49 qui peut coulisser dans une lumière horizontale 50 de la crémaillère 42. On voit que la rotation de la manette 49 autour de son axe 40 entraîne un mouvement de translation horizontale de la crémaillère 42 s'étendant longitudinalement le long de la paroi 14.

La crémaillère 42 est pourvue d'une partie crantée 43 qui est en prise avec une roue crantée 44 qui est solidaire en rotation de l'axe 17 de la grille 16 (représentée ici en pointillés). La crémaillère 42 s'étend sensiblement sur toute la longueur de la paroi 14 et elle est pourvue d'un nombre de parties crantées 43, qui sont associées à autant de roues crantées, en nombre égal au nombre de paire de grilles.

Le dispositif est réglé de telle sorte que lorsque la poignée 39 est en position centrale (sensiblement verticale dans la position normale d'utilisation du panier), les grilles sont horizontales. Lorsque la poignée 39 est orientée d'un côté ou de l'autre par rapport à sa position centrale initiale, la crémaillère 42 subit un mouvement de translation, dans un sens ou dans l'autre, ce qui entraîne la rotation des roues crantées qui lui sont associées, et donc la rotation simultanée autour de leur axe 17 de toutes les grilles 16 du groupe concerné.

Un système de fonctionnement similaire est prévu pour les grilles 16' de l'autre groupe.

Le dispositif qui vient d'être décrit est particulièrement avantageux, car il permet de moduler aisément le nombre de grilles dans le panier, à partir de batteries de grilles interchangeables, comportant chacune un nombre de grilles déterminé, les roues crantées et la crémaillère associée à fixer sur la paroi 14. On peut également prévoir d'utiliser une crémaillère fixe comportant un nombre élevé de parties crantées. Il suffit alors d'adapter de façon adéquate, sur les unes ou les autres de ces parties crantées, les roues crantées et les grilles associées, pour obtenir un panier comportant le nombre de grilles souhaité.

L'ensemble du dispositif est représenté sur la figure 6, sur laquelle on peut voir les deux manettes 18 et 19, qui sont associées chacune respectivement à une crémaillère 45 et 42 commandant la rotation de plusieurs axes 17, 17' des grilles 16,16'.

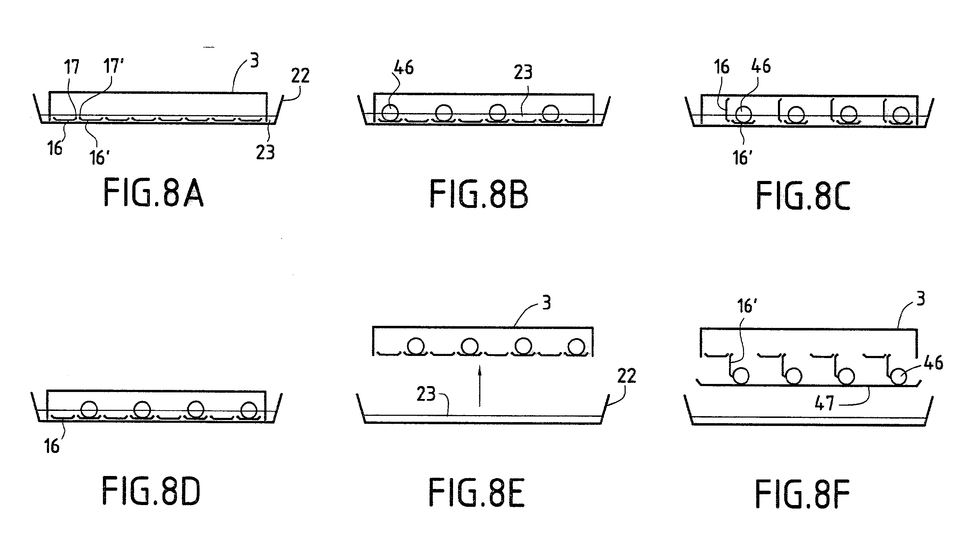

Le procédé de cuisson des beignets passe par les étapes suivantes, comme illustré sur les figures 8a à 8f, montrant de façon très schématique le panier 3 et la cuvette 22 contenant l'huile 23.

Dans l'appareil représenté sur la figure 8a, le panier 3 vide est en position basse dans la cuvette 22, l'ensemble des grilles 16, 16' étant en position horizontale.

La première étape pour la cuisson consiste à placer les beignets 46 crus dans le panier, en les répartissant uniquement sur les premières grilles 16 de chaque paire en les alignant selon une direction transversale, comme illustré sur la figure 8b. On peut, par exemple, placer cinq beignets sur chaque grille 16, et avec un panier à quatre paires de grilles, cela permet la cuisson simultanée de vingt beignets. Les faces inférieures des beignets baignent alors dans l'huile chaude 23.

Au bout d'un certain temps, lorsque l'utilisateur juge que la cuisson des premières faces des beignets est convenable, il oriente la manette 18 de manière à entraîner la rotation simultanée de toutes les premières grilles 16 vers le haut, en direction des deuxièmes grilles 16', et ce jusqu'à ce que les grilles 16 atteignent au moins une position sensiblement verticale. Lors de ce mouvement de rotation, les beignets 46 roulent sur les rebords 41 (figure 2), ils se retournent et se posent sur les grilles 16' correspondantes. Ils reposent alors sur les deuxièmes grilles 16' par leur face non encore frite, qui est à son tour soumise à la cuisson, comme indiqué sur la figure 8c.

Une fois les beignets en place sur les grilles 16', il est possible de ramener les grilles 16 à leur position initiale (figure 7d). Une fois la cuisson terminée, l'utilisateur actionne la manette 6 pour faire remonter le panier 3 à la verticale de la cuvette 22, hors de l'huile 23 (figure 8e).

Il lui suffit ensuite, comme illustré sur la figure 8f, de glisser un plateau 47 de récupération des beignets 46 sous le panier 3 au-dessus de la cuve 22, puis de faire pivoter simultanément les grilles 16' vers le bas au moyen de la manette 19, de façon à ce que les beignets 46 cuits sur leurs deux faces glissent et tombent sur le plateau de récupération 47. Ils peuvent alors être offerts à la vente.

Pour cuire une nouvelle série de beignets, il faut remettre les deuxièmes grilles 16' en position horizontale, les premières grilles 16 peuvent être aussi simultanément remises en position horizontale si cela n'a pas encore été fait. On peut alors placer les nouveaux beignets à cuire dans le panier.

La cuisson des beignets est ainsi très facile à réaliser. En particulier, le fait que les deux grilles d'une même paire soient articulées en rotation par leurs bords voisins rend l'utilisation de l'appareil très simple, puisqu'il suffit initialement de déposer les beignets sur une grille sur deux, en partant d'un bord du panier.

Dans des modes de réalisation de l'invention plus élaborés, le système de montée/descente du panier et/ou les systèmes de rotation des grilles sont automatiques, notamment électriques, et non plus manuels. Il est alors avantageux de prévoir une minuterie réglable pour fixer le temps de cuisson de chaque côté du beignet et commander le fonctionnement de ces systèmes.

La description qui précède explique clairement comment l'invention permet d'atteindre les objectifs qu'elle s'est fixés. En particulier, on effectue avec une structure simple et peu coûteuse le retournement des beignets sans danger et rapidement. Par ailleurs, le fait que le panier ne comporte pas de fond et que les deuxièmes grilles pivotent vers le bas permet de vider le panier très rapidement et sans danger dès que les beignets sont entièrement frits;

Il ressort néanmoins de ce qui précède que l'invention n'est pas limitée aux modes de mise en oeuvre qui ont été spécifiquement décrits et représentés sur les figures. En particulier, on peut prévoir d'autres dispositifs de montée/descente des paniers.

## Revendications

1. Appareil de cuisson par friture d'entremets, tels que des beignets (46), qui comporte un panier (3) destiné à recevoir lesdits entremets plongeant dans une cuve (22) dudit appareil contenant de l'huile de friture brûlante (23), **caractérisé en ce que** le panier est constitué d'un cadre horizontal rectangulaire (12) sur lequel sont fixées des paires de grilles horizontales transversales voisines (16, 16') qui sont montées à pivotement, à une de leurs extrémités, autour d'un axe horizontal transversal (17, 17'), la disposition des deux grilles (16, 16') étant la même pour toutes les paires de grilles, et **en ce que**, dans chaque paire de grilles, la première grille (16) peut pivoter vers le haut jusqu'à atteindre une position sensiblement verticale et la deuxième grille (16') peut pivoter vers le bas jusqu'à atteindre une position sensiblement verticale, l'axe de pivotement (17) de la première grille étant voisin de la deuxième grille (16').

2. Appareil selon la revendication 1, **caractérisé en ce que** l'extrémité articulée des premières grilles (16) comporte un rebord (51) dirigé vers le haut.

3. Appareil selon la revendication 1 ou 2, **caractérisé en ce que** le panier (3) comporte des parois verticales transversales ajourées (13) qui s'étendent à partir des grilles (16, 16').

4. Appareil selon l'une quelconque des revendications 1 à 4, **caractérisé en ce que** l'ensemble des premières grilles (16), à pivotement vers le haut, et l'ensemble des deuxièmes grilles (16'), à pivotement vers le bas, comportent chacun un dispositif de commande de leur pivotement (19, 39-44).

5. Appareil selon la revendication 4, **caractérisé en ce que** chaque dispositif de commande du pivotement comporte une crémaillère (42) qui entraîne des roues dentées (44) solidaires des axes de pivotement (17, 17') des grilles (16, 16').

6. Appareil selon l'une quelconque des revendications 1 à 5, **caractérisé en ce qu'**il comporte un dispositif de montée et de descente du panier (6, 32-36).

7. Appareil selon la revendication 6, **caractérisé en ce que** le dispositif de montée et de descente du panier est associé à un dispositif de maintien du panier en position haute (36).

8. Appareil selon la revendication 7, **caractérisé en ce que** le dispositif de maintien du panier en position haute comporte un vérin à gaz (36).

9. Procédé de cuisson par friture d'entremets, tels que des beignets, dans un appareil conformé selon au moins l'une quelconque des revendications précédentes, **caractérisé en ce que** :
- on dépose les entremets à frire (46) sur les premières grilles (16) de chaque paire de grille, les entremets étant alignés parallèlement à l'axe de pivotement des grilles,
- on fait frire une première face des entremets, le panier (3) étant disposé dans la cuve (22),
- on fait pivoter vers le haut d'au moins 90 degrés les premières grilles (16) de chaque paire de grilles de telle manière que les entremets viennent se placer sur les deuxièmes grilles (16') de chaque paire de grilles, leur face non cuite étant en contact avec la grille (16) et le panier (3) restant en position de cuisson dans la cuve (22),
- on fait frire la deuxième face des entremets, le panier étant disposé dans la cuve,
- on soulève le panier (3) et on place un plateau (47) au-dessous du panier (3) et au-dessus de la cuve (22),
- et on fait pivoter vers le bas d'au moins 90 degrés les deuxièmes grilles (16') de chaque paire de grilles de telle manière que les entremets viennent se placer sur le plateau (47).

10. Procédé selon la revendication 10, **caractérisé en ce que** les premières grilles sont ramenées en position horizontale pendant l'opération de friture de la deuxième face des entremets.
